# FASCICULE DE BREVET EUROPEEN

(11) **EP 3 227 596 B1**
(45) Date de publication et mention de la délivrance du brevet: **10.07.2019**
(21) Numéro de dépôt: 15805603.6
(22) Date de dépôt: 20.11.2015
(51) Int. Cl.: F16L 11/12, F16L 11/16, F16L 57/06, F16L 11/10

(54) **CONDUIT MULTICOUCHE ET SON PROCEDE DE FABRICATION ET BANDE SOUPLE APTE A FORMER UNE COUCHE DUDIT CONDUIT**
MEHRSCHICHTKANAL UND HERSTELLUNGSVERFAHREN DAFÜR SOWIE FLEXIBLES BAND ZUR FORMUNG EINER SCHICHT DES BESAGTEN KANALS
MULTILAYER DUCT AND METHOD FOR MANUFACTURING SAME AND FLEXIBLE STRIP ABLE TO FORM A LAYER OF SAID DUCT

(30) Priorité: 03.12.2014 FR 1461840
(43) Date de publication de la demande: 11.10.2017
(73) Titulaire: Trelleborg Industrie, F-63100 Clermont-Ferrand (FR)
(72) Inventeur: MARCONNET, Loïc, 63520 Estandeuil (FR); DUMOULIN, Ludovic, 63450 Le Crest (FR)
(74) Mandataire: Godineau, Valérie
(86) Numéro de dépôt international: PCT/FR2015/053149
(87) Numéro de publication internationale: WO 2016/087739

(56) Documents cités:
- WO-A1-2008/119395
- DE-B- 1 019 132
- US-A- 4 073 318
- US-A- 4 484 969

## Description

La présente invention concerne un conduit multicouche, notamment pour le transport de matières abrasives et son procédé de fabrication, ainsi qu'une bande souple apte à former une couche dudit conduit.

Elle concerne plus particulièrement un conduit multicouche dont au moins une couche comprend une bande enroulée hélicoïdalement sous forme de spires jointives, ladite bande comprenant un support longitudinal et des plaques de protection fixées audit support, lesdites plaques de protection étant organisées sur ledit support en rangées présentant des bords longitudinaux rectilignes sensiblement parallèles, chaque rangée de plaques étant séparée d'une rangée de plaques adjacente par un espace libre formant une ligne de séparation, les lignes de séparation étant parallèles entre elles.

De tels conduits souples, qui peuvent être raccordés à des moyens de propulsion ou d'aspiration, subissent une usure rapide, notamment quand ils sont utilisés pour le transport de matières abrasives. Pour limiter cette usure, des plaques de protection réalisées en un matériau résistant à l'abrasion tel que la céramique sont utilisées pour la fabrication du conduit, comme l'illustre par exemple la demande internationale WO 2008/119395 ou le document US-4.484.969. Ces plaques de protection sont fixées par collage à un support se présentant sous forme d'un matériau en bande. Cet ensemble, formé du support et des plaques de protection, constitue une bande qui est enroulée hélicoïdalement autour d'un mandrin pour former l'une des couches dudit conduit. Pour réaliser une coupe droite d'un tel conduit, il est nécessaire de couper la céramique. Pour résoudre ce problème, certains fabricants ont imaginé un conduit où la couche du conduit résistante à l'abrasion n'est plus formée d'une bande de plaques mais de bagues en céramique coaxiales décalées axialement le long du conduit, comme l'illustrent les documents WO 2010/115414 et EP-1.877.689. Toutefois, de telles solutions sont plus difficiles à fabriquer.

Un but de la présente invention est de proposer un conduit dont la conception permet une coupe droite du conduit sans nuire à la simplicité de fabrication dudit conduit.

A cet effet, l'invention a pour objet un conduit multicouche dont au moins une couche comprend une bande enroulée hélicoïdalement sous forme de spires jointives, ladite bande comprenant un support longitudinal et des plaques de protection fixées audit support, lesdites plaques de protection étant organisées sur ledit support en rangées présentant des bords longitudinaux rectilignes sensiblement parallèles, chaque rangée de plaques étant séparée d'une rangée de plaques adjacente par un espace libre formant une ligne de séparation, les lignes de séparation étant parallèles entre elles, caractérisé en ce que les lignes de séparation des rangées de plaques s'étendent chacune dans un plan perpendiculaire à l'axe longitudinal du conduit.

Grâce à la disposition des rangées de plaques, une coupe droite du conduit peut être réalisée sans nuire à la simplicité de fabrication du conduit résultant de la possibilité d'enroulement hélicoïdal de la bande support de plaques de protection lors de la fabrication dudit conduit. Les lignes de séparation permettent en outre de garantir la flexibilité du conduit.

De préférence, chaque ligne de séparation, de longueur égale à la circonférence du conduit au niveau de ladite couche, s'étend d'un bord longitudinal à l'autre bord longitudinal de la bande en formant un angle non nul différent de 90° avec chacun des bords longitudinaux de la bande et au moins l'un des bords transversaux d'extrémité de la bande est un bord dit biseauté s'étendant parallèlement aux lignes de séparation.

De préférence, l'angle entre chaque ligne de séparation et l'un des bords longitudinaux de la bande est compris entre 20 et 80°, de préférence voisin de 45°.

De préférence, chaque rangée de plaques est formée de n série(s) de plaques de protection, n étant un nombre entier ; lorsque n est égal à 1, chaque plaque de ladite série de plaques présente au moins deux bords sensiblement parallèles aptes à former les bords longitudinaux de ladite rangée de plaques ; et lorsque n est égal ou supérieur à 2, chaque plaque d'au moins deux séries de plaques présente au moins un bord rectiligne apte à former un bord longitudinal de la rangée de plaques, chaque bord longitudinal rectiligne d'une rangée de plaques étant formé par l'alignement d'un bord rectiligne d'au moins une partie des plaques de ladite rangée.

De préférence, chaque plaque de protection est en un matériau résistant à l'abrasion choisi, de préférence, dans le groupe formé par les céramiques.

De préférence, les plaques de protection sont fixées au support par collage.

De préférence, le support longitudinal est un ruban.

De préférence, la couche, sous forme de bande enroulée hélicoïdalement et comprenant un support et des plaques de protection, jouxte une couche formée d'un matériau élastiquement déformable qui s'insère au moins partiellement entre lesdites plaques au niveau des lignes de séparation entre rangées de plaques.

L'invention a encore pour objet un procédé de fabrication à l'aide d'un mandrin d'un conduit multicouche comprenant une étape de fabrication d'une couche dudit conduit par enroulement hélicoïdal sous forme de spires jointives d'une bande comprenant un support longitudinal et des plaques de protection fixées audit support, lesdites plaques de protection étant organisées sur ledit support en rangées présentant des bords longitudinaux rectilignes sensiblement parallèles, chaque rangée de plaques étant séparée d'une rangée de plaques adjacente par un espace libre formant une ligne de séparation, les lignes de séparation étant parallèles entre elles, caractérisé en ce qu'au cours de l'étape d'enroulement hélicoïdal de la bande autour du mandrin, on dispose chaque ligne de séparation dans un plan perpendiculaire à l'axe longitudinal du mandrin.

Selon un mode de mise en oeuvre préféré du procédé, chaque ligne de séparation, de longueur égale à la circonférence du conduit à réaliser au niveau de ladite couche, s'étendant d'un bord longitudinal à l'autre bord longitudinal de la bande en formant un angle α non nul différent de 90° avec chacun des bords longitudinaux de la bande et chaque bord transversal d'extrémité de la bande étant un bord dit biseauté s'étendant parallèlement aux lignes de séparation, on débute l'étape d'enroulement en enroulant l'un des bords transversaux d'extrémité de la bande autour du mandrin dans un plan circonférentiel du mandrin.

L'invention sera bien comprise à la lecture de la description suivante d'exemples de réalisation, en référence aux dessins annexés dans lesquels :
la figure 1 représente une vue en perspective d'un conduit conforme à l'invention prise à un stade de fabrication du conduit correspondant au stade où la couche formée d'une bande de plaques de céramique est apparente ;
la figure 2 représente une vue en coupe transversale d'un conduit réalisé conformément à l'invention ;
la figure 3 représente une vue à plat de la bande avant enroulement ;
la figure 4 représente une vue schématique de l'étape d'enroulement de la bande autour du mandrin ;
la figure 5 représente des vues d'exemples de formes de plaques aptes à constituer une rangée de plaques.

Comme mentionné ci-dessus, l'invention a pour objet un conduit 1 multicouche raccordable notamment à des moyens d'aspiration ou à des moyens de propulsion pour le transport de fluide ou de matière quelconque et en particulier de matière abrasive.

Pour résister à une usure trop rapide par abrasion, au moins l'une des couches 2 du conduit comprend une bande 3 enroulée hélicoïdalement sous forme de spires jointives, cette bande 3 comprenant un support 4 longitudinal et des plaques 5 de protection fixées audit support 4. Le support 4 est, de manière générale, un matériau en bande et les plaques 5 de protection sont fixées sur l'une des faces de ce support. Dans l'exemple représenté, ce support 4 est un ruban, c'est-à-dire une bande mince souple et flexible qui peut être réalisée en un matériau textile ou en un matériau de synthèse ou en caoutchouc. Les plaques 5 de protection sont fixées au support par collage et sont organisées sur le support 4 en rangées 6 présentant des bords longitudinaux rectilignes sensiblement parallèles. Chaque rangée 6 de plaques 5 s'étend d'un bord longitudinal 31 à l'autre bord longitudinal 31 de la bande 3. Chaque bord longitudinal rectiligne d'une rangée de plaques est formé par l'alignement d'un bord rectiligne d'au moins une partie des plaques de ladite rangée de plaques. Par l'expression "des rangées présentant des bords longitudinaux sensiblement parallèles", on entend des rangées dont les bords longitudinaux sont parallèles entre eux à ± 7° près. Chaque rangée 6 de plaques est séparée d'une rangée 6 de plaques adjacente par un espace libre formant une ligne 7 de séparation. Cet espace laissé libre correspond à l'espace entre les bords longitudinaux rectilignes de deux rangées de plaques adjacentes. Lesdits bords longitudinaux sont sensiblement parallèles entre eux. Les lignes 7 de séparation sont parallèles entre elles.

Les plaques 5 de protection sont des plaques réalisées ici en céramique. Chaque rangée 6 de plaques 5 est formée de n série(s) de plaques 5 de protection, n étant un nombre entier. Lorsque n est égal à 1, chaque plaque 5 de ladite série de plaques 5 présente au moins deux bords sensiblement parallèles aptes à former les bords longitudinaux de ladite rangée de plaques 5. Lorsque n est égal ou supérieur à 2, chaque plaque 5 d'au moins deux séries de plaques présente au moins un bord rectiligne apte à former un bord longitudinal de la rangée 6 de plaques 5. Chaque bord longitudinal rectiligne d'une rangée de plaques 5 est donc formé par l'alignement d'un bord rectiligne d'au moins une partie des plaques 5 de ladite rangée.

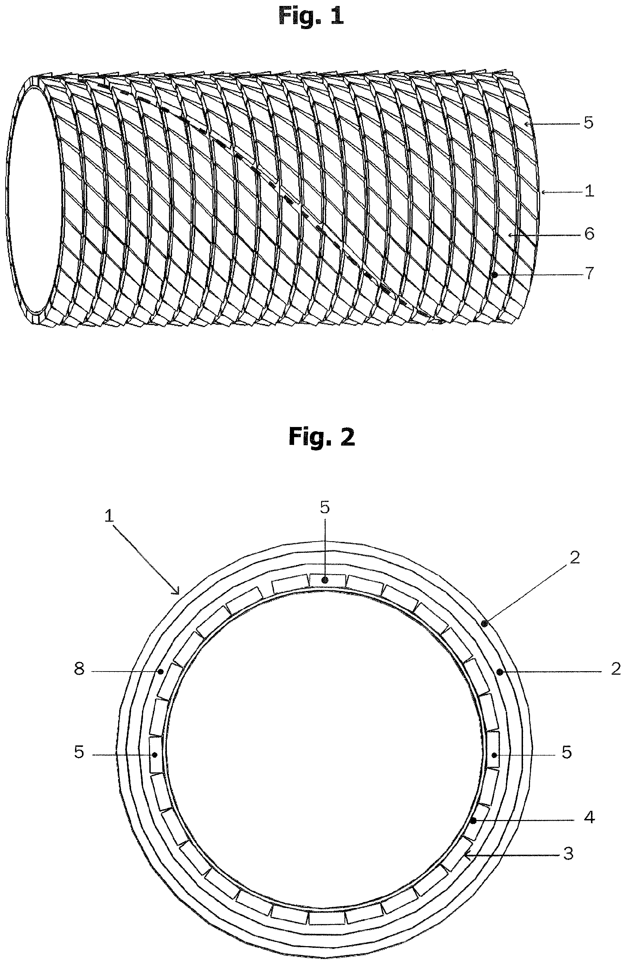

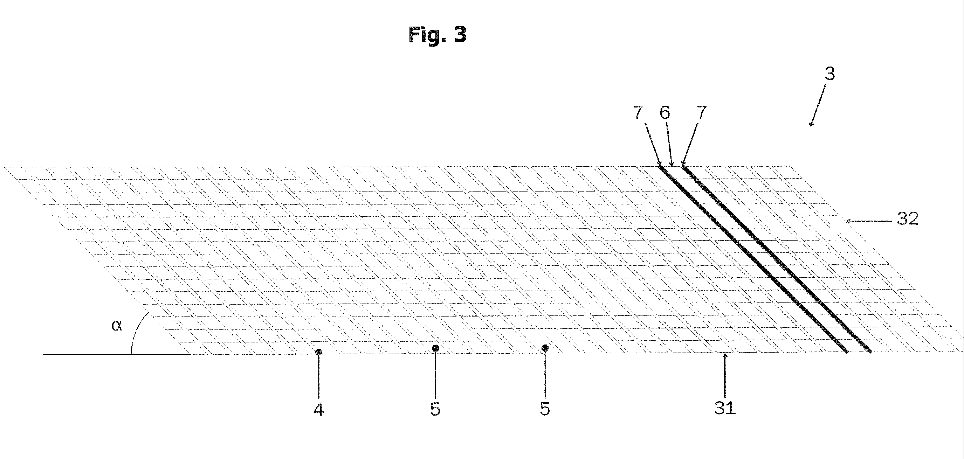

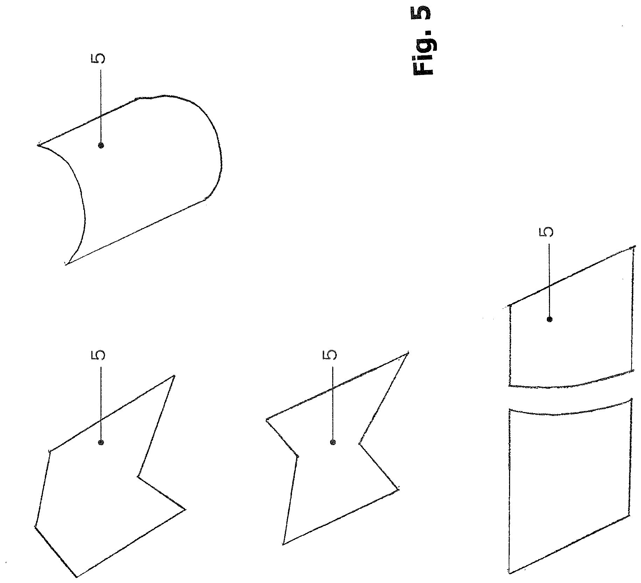

Ces plaques 5 de protection affectent, aux figures 1 et 3, la forme de parallélogrammes, en particulier ici de losanges. Cette forme permet de réduire l'interstice entre plaques. Bien évidemment, d'autres formes de plaques présentant de préférence au moins deux côtés opposés parallèles auraient pu être envisagées sans sortir du cadre de l'invention. Comme l'illustre la figure 5, lesdits côtés parallèles s'étendent parallèlement aux lignes 7 de séparation. Chaque rangée de plaques peut encore être formée d'au moins deux séries de plaque comme l'illustre le dernier schéma de la figure 5. Dans cet exemple, chaque rangée comportera deux séries de plaques avec chaque plaque d'une série présentant un bord rectiligne formant, c'est-à-dire coopérant à la réalisation, d'un bord longitudinal de la rangée de plaques. Les plaques 5 de protection des figures 1 et 3 présentent ici une épaisseur de 4 mm et une longueur de chaque côté du losange égale à 8 mm. Chaque rangée de plaques est séparée d'une rangée 6 de plaques 5 adjacente par un interstice de 2 mm de largeur formant la ligne 7 de séparation. Chaque rangée de plaques est ici formée de quinze plaques. La bande 3 ainsi obtenue comprend deux bords 31 longitudinaux et deux bords 32 transversaux d'extrémité. Chaque ligne 7 de séparation de longueur égale à la circonférence de l'enroulement à former à l'aide de ladite bande s'étend, dans le sens de sa longueur, d'un bord 31 longitudinal à l'autre bord 31 longitudinal de la bande 3 en formant un angle non nul différent de 90° avec chacun des bords 31 longitudinaux de la bande. Il en est de même avec chaque rangée 6 de plaques. Au moins l'un, en l'occurrence ici chacun des bords 32 transversaux d'extrémité de la bande 3, est un bord biseauté s'étendant parallèlement aux lignes 7 de séparation.

Dans l'exemple représenté, l'angle α est voisin de 45°.

Deux lignes de séparation ont été noircies à la figure 3 pour mieux les visualiser. Grâce à cette disposition relative des rangées de plaques de protection et des bords longitudinaux de la bande, il en résulte la possibilité pour les lignes 7 de séparation des rangées 6 de plaques 5 de s'étendre chacune dans un plan perpendiculaire à l'axe longitudinal du conduit 1 à l'état enroulé de la bande.

Dans l'exemple représenté, le conduit comporte plusieurs couches 2 dont l'une des couches est formée par la bande décrite ci-dessus et dont une autre couche 8 est formée d'un matériau élastiquement déformable, en l'occurrence ici de caoutchouc. Cette couche 8 en caoutchouc jouxte la couche 2 à bande avec plaques de protection. Cette couche en caoutchouc est réalisée à partir d'une bande de caoutchouc enroulée hélicoïdalement ou posée en ligne. Le caoutchouc de ladite bande s'insère au moins partiellement entre les plaques de protection de la couche qu'elle recouvre au niveau des lignes de séparation entre rangées 6 de plaques. Ces couches sont adhérées l'une à l'autre au moment de la vulcanisation du caoutchouc. Bien évidemment des couches supplémentaires, par exemple réalisées sous forme de couches en matière textile, peuvent également être prévues. Le support 4 de plaques 5 de protection peut indifféremment être disposé, côté intérieur ou côté extérieur du conduit, par rapport auxdites plaques 5.

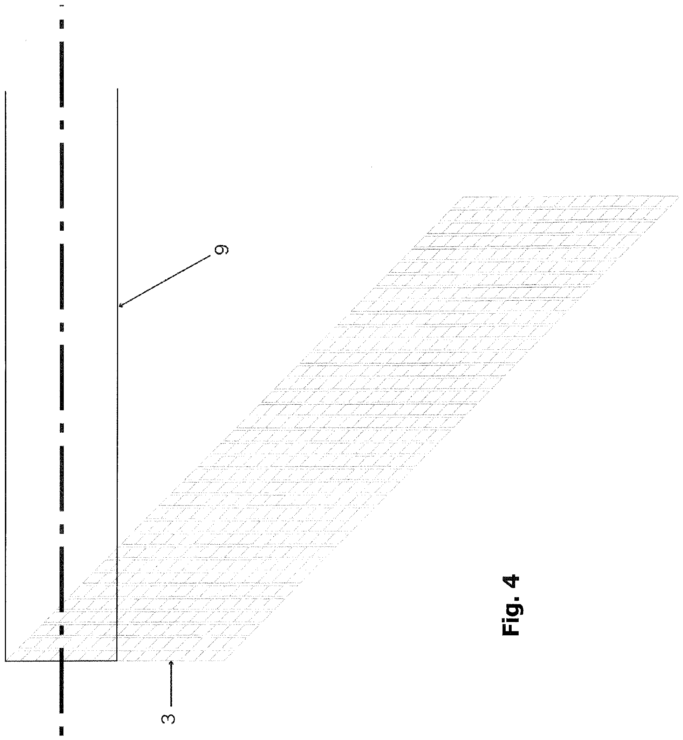

Pour la fabrication d'un tel conduit, on dispose autour d'un mandrin 9 les couches successives avant vulcanisation, lorsqu'au moins l'une des couches comprend du caoutchouc. Pour la réalisation de la couche formée de la bande 3 comprenant les plaques 5 de protection, on débute l'étape d'enroulement comme illustré à la figure 4 en enroulant l'un des bords 32 transversaux d'extrémité de la bande 3 autour du mandrin dans un plan circonférentiel du mandrin. L'angle d'enroulement ou d'inclinaison de l'hélice correspond donc à l'angle α formé entre les lignes 7 de séparation et l'un des bords 31 longitudinaux de la bande.

## Revendications

1. Conduit (1) multicouche dont au moins une couche (2) comprend une bande (3) enroulée hélicoïdalement sous forme de spires jointives, ladite bande (3) comprenant un support (4) longitudinal et des plaques (5) de protection fixées audit support (4), lesdites plaques (5) de protection étant organisées sur ledit support (4) en rangées (6) présentant des bords longitudinaux rectilignes sensiblement parallèles, chaque rangée (6) de plaques étant séparée d'une rangée (6) de plaques adjacente par un espace libre formant une ligne (7) de séparation, les lignes (7) de séparation étant parallèles entre elles,
**caractérisé en ce que** les lignes (7) de séparation des rangées (6) de plaques (5) s'étendent chacune dans un plan perpendiculaire à l'axe longitudinal du conduit (1).

2. Conduit (1) selon la revendication 1,
**caractérisé en ce que** chaque ligne (7) de séparation, de longueur égale à la circonférence du conduit (1) au niveau de ladite couche (2), s'étend d'un bord (31) longitudinal à l'autre bord (31) longitudinal de la bande (3) en formant un angle non nul différent de 90° avec chacun des bords (31) longitudinaux de la bande (3) et **en ce qu'**au moins l'un des bords (32) transversaux d'extrémité de la bande (3) est un bord dit biseauté s'étendant parallèlement aux lignes (7) de séparation.

3. Conduit (1) selon l'une des revendications précédentes,
**caractérisé en ce que** l'angle (a) entre chaque ligne (7) de séparation et l'un des bords (31) longitudinaux de la bande (3) est compris entre 20 et 80°, de préférence voisin de 45°.

4. Conduit (1) selon l'une des revendications précédentes,
**caractérisé en ce que** chaque rangée (6) de plaques (5) est formée de n série(s) de plaques (5) de protection, n étant un nombre entier, **en ce que**, lorsque n est égal à 1, chaque plaque (5) de ladite série de plaques (5) présente au moins deux bords sensiblement parallèles aptes à former les bords longitudinaux de ladite rangée de plaques (5) et **en ce que**, lorsque n est égal ou supérieur à 2, chaque plaque (5) d'au moins deux séries de plaques présente au moins un bord rectiligne apte à former un bord longitudinal de la rangée (6) de plaques (5) chaque bord longitudinal rectiligne d'une rangée de plaques (5) étant formé par l'alignement d'un bord rectiligne d'au moins une partie des plaques (5) de ladite rangée.

5. Conduit (1) selon l'une des revendications précédentes,
**caractérisé en ce que** chaque plaque (5) de protection est en un matériau résistant à l'abrasion choisi, de préférence, dans le groupe formé par les céramiques et **en ce que** les plaques (5) de protection sont fixées au support (4) par collage.

6. Conduit (1) selon l'une des revendications précédentes,
**caractérisé en ce que** le support (4) longitudinal est un ruban.

7. Conduit (1) selon l'une des revendications précédentes,
**caractérisé en ce que** la couche (2), sous forme de bande (3) enroulée hélicoïdalement et comprenant un support (4) et des plaques (5) de protection, jouxte une couche (8) formée d'un matériau élastiquement déformable qui s'insère au moins partiellement entre lesdites plaques (5) au niveau des lignes (7) de séparation entre rangées (6) de plaques (5).

8. Procédé de fabrication à l'aide d'un mandrin d'un conduit (1) multicouche comprenant une étape de fabrication d'une couche (2) dudit conduit (1) par enroulement hélicoïdal sous forme de spires jointives d'une bande (3) comprenant un support (4) longitudinal et des plaques (5) de protection fixées audit support (4), lesdites plaques (5) de protection étant organisées sur ledit support (4) en rangées (6) présentant des bords longitudinaux rectilignes sensiblement parallèles, chaque rangée (6) de plaques (5) étant séparée d'une rangée (6) de plaques (5) adjacente par un espace libre formant une ligne (7) de séparation, les lignes (7) de séparation étant parallèles entre elles, **caractérisé en ce qu'**au cours de l'étape d'enroulement hélicoïdal de la bande (3) autour du mandrin, on dispose chaque ligne (7) de séparation dans un plan perpendiculaire à l'axe longitudinal du mandrin.

9. Procédé selon la revendication 8,
**caractérisé en ce que** chaque ligne (7) de séparation, de longueur égale à la circonférence du conduit (1) à réaliser au niveau de ladite couche, s'étendant d'un bord (31) longitudinal à l'autre bord (31) longitudinal de la bande (3) en formant un angle (α) non nul différent de 90° avec chacun des bords longitudinaux de la bande et chaque bord (32) transversal d'extrémité de la bande étant un bord dit biseauté s'étendant parallèlement aux lignes (7) de séparation, on débute l'étape d'enroulement en enroulant l'un des bords (32) transversaux d'extrémité de la bande (3) autour du mandrin dans un plan circonférentiel du mandrin.

## Patentansprüche

1. Mehrschichtkanal (1), von dem mindestens eine Schicht (2) ein in Form von fugendichten Windungen schraubenförmig gewickeltes Band (3) umfasst, wobei das Band (3) einen länglichen Träger (4) und an dem Träger (4) befestigte Schutzplatten (5) umfasst, wobei die Schutzplatten (5) auf dem Träger (4) in Reihen (6) organisiert sind, die etwa parallele gerade längliche Ränder aufweisen, wobei jede Plattenreihe (6) von einer benachbarten Plattenreihe (6) durch einen Freiraum getrennt ist, der eine Trennlinie (7) bildet, wobei die Trennlinien (7) zueinander parallel sind,
**dadurch gekennzeichnet, dass** sich die Trennlinien (7) der Reihen (6) von Platten (5) jeweils in einer Ebene erstrecken, die senkrecht zur Längsachse des Kanals (1) ist.

2. Kanal (1) nach Anspruch 1,
**dadurch gekennzeichnet, dass** sich jede Trennlinie (7) mit einer Länge, die gleich dem Umfang des Kanals (1) im Bereich der Schicht (2) ist, von einem Längsrand (31) zum anderen Längsrand (31) des Bandes (3) erstreckt und dabei mit jedem der Längsränder (31) des Bandes (3) einen Winkel ungleich Null unterschiedlich von 90° bildet und dass mindestens einer der transversalen Endränder (32) des Bandes (3) ein schräger Rand ist, der sich parallel zu den Trennlinien (7) erstreckt.

3. Kanal (1) nach einem der vorangehenden Ansprüche,
**dadurch gekennzeichnet, dass** der Winkel (a) zwischen jeder Trennlinie (7) und einem der Längsränder (31) des Bandes (3) zwischen 20 und 80° liegt, vorzugsweise bei 45°.

4. Kanal (1) nach einem der vorangehenden Ansprüche,
**dadurch gekennzeichnet, dass** jede Reihe (6) von Platten (5) von n Serien von Schutzplatten (5) gebildet ist, wobei n eine Ganzzahl ist, dass, wenn n gleich 1 ist, jede Platte (5) der Serie von Platten (5) mindestens zwei etwa parallele Ränder aufweist, die imstande sind, die Längsränder der Reihe von Platten (5) zu bilden und dass, wenn n gleich oder größer als 2 ist, jede Platte (5) von mindestens zwei Plattenserien mindestens einen geraden Rand aufweist, der imstande ist, einen Längsrand der Reihe (6) von Platten (5) zu bilden, wobei jeder gerade Längsrand einer Reihe von Platten (5) durch die fluchtende Anordnung eines geraden Randes von mindestens einem Teil der Platten (5) der Reihe gebildet ist.

5. Kanal (1) nach einem der vorangehenden Ansprüche,
**dadurch gekennzeichnet, dass** jede Schutzplatte (5) aus einem abriebfesten Material ist, das vorzugsweise aus der Gruppe ausgewählt ist, die von den Keramiken gebildet ist, und dass die Schutzplatten (5) auf dem Träger (4) durch Kleben befestigt sind.

6. Kanal (1) nach einem der vorangehenden Ansprüche,
**dadurch gekennzeichnet, dass** der Längsträger (4) ein Streifen ist.

7. Kanal (1) nach einem der vorangehenden Ansprüche,
**dadurch gekennzeichnet, dass** die Schicht (2) in Form eines schraubenförmig gewickelten Bandes (3) und umfassend einen Träger (4) und Schutzplatten (5) eine Schicht (8) säumt, die von einem elastisch verformbaren Material gebildet ist, das sich mindestens teilweise zwischen den Platten (5) im Bereich der Trennlinien (7) zwischen Reihen (6) von Platten (5) einfügt.

8. Verfahren zur Herstellung mit Hilfe eines Kern seines Mehrschichtkanals (1), umfassend einen Schritt der Herstellung einer Schicht (2) des Kanals (1) durch schraubenförmiges Wickeln in Form fugendichter Windungen eines Bandes (3), umfassend einen Längsträger (4) und Schutzplatten (5), die an dem Träger (4) befestigt sind, wobei die Schutzplatten (5) auf dem Träger (4) in Reihen (6) organisiert sind, die etwa parallele gerade längliche Ränder aufweisen, wobei jede Reihe (6) von Platten (5) von einer benachbarten Reihe (6) von Platten (5) durch einen Freiraum getrennt ist, der eine Trennlinie (7) bildet, wobei die Trennlinien (7) zueinander parallel sind,
**dadurch gekennzeichnet, dass** bei dem Schritt des schraubenförmigen Wickelns des Bandes (3) um den Kern jede Trennlinie (7) in einer Ebene angeordnet wird, die senkrecht zur Längsachse des Kerns ist.

9. Verfahren nach Anspruch 8,
**dadurch gekennzeichnet, dass**, wobei sich jede Trennlinie (7) mit einer Länge, die gleich dem Umfang des Kanals (1) ist, die im Bereich der Schicht (2) herzustellen ist, von einem Längsrand (31) zum anderen Längsrand (31) des Bandes (3) erstreckt und dabei mit jedem der Längsränder (31) des Bandes (3) einen Winkel ungleich Null unterschiedlich von 90° bildet und jeder transversale Endrand (32) des Bandes (3) ein schräger Rand ist, der sich parallel zu den Trennlinien (7) erstreckt, der Schritt des Wickelns durch Wickeln von einem der transversalen Endränder (32) des Bandes (3) um den Kern in einer Umfangsebene des Kerns beginnt.

## Claims

1. A multilayer pipe (1) whereof at least one layer (2) comprises a strip (3) wound helically in the form of adjacent turns, said strip (3) comprising a longitudinal support (4) and protection plates (5) fastened to said support (4), said protection plates (5) being organized on said support (4) in rows (6) having substantially parallel straight longitudinal edges, each row (6) of plates being separated from an adjacent row (6) of plates by a free space forming a separating line (7), the separating lines (7) being parallel to one another, **characterized in that** the separating lines (7) of the rows (6) of plates (5) each extend in a plane perpendicular to the longitudinal axis of the pipe (1).

2. The pipe (1) according to claim 1,
**characterized in that** each separating line (7), equal in length to the circumference of the pipe (1) at said layer (2), extends from one longitudinal edge (31) to the other longitudinal edge (31) of the strip (3) while forming a non-nil angle different from 90° with each of the longitudinal edges (31) of the strip (3) and **in that** at least one of the transverse end edges (32) of the strip (3) is a so-called beveled edge extending parallel to the separating lines (7).

3. The pipe (1) according to one of the preceding claims,
**characterized in that** the angle (α) between each separating line (7) and one of the longitudinal edges (31) of the strip (3) is between 20 and 80°, preferably close to 45°.

4. The pipe (1) according to one of the preceding claims,
**characterized in that** each row (6) of plates (5) is formed by n series of protection plates (5), n being an integer, **in that**, when n is equal to 1, each plate (5) of said series of plates (5) has at least two substantially parallel edges capable of forming the longitudinal edges of said row of plates (5) and **in that**, when n is equal to or greater than 2, each plate (5) of at least two series of plates has at least one straight edge capable of forming a longitudinal edge of the row (6) of plates (5), each straight longitudinal edge of a row of plates (5) being formed by the alignment of a straight edge of at least part of the plates (5) of said row.

5. The pipe (1) according to one of the preceding claims,
**characterized in that** each protection plate (5) is made from an abrasion-resistant material preferably chosen from the group formed by ceramics and **in that** the protection plates (5) are fastened to the support (4) by gluing.

6. The pipe (1) according to one of the preceding claims,
**characterized in that** the longitudinal support (4) is a tape.

7. The pipe (1) according to one of the preceding claims,
**characterized in that** the layer (2), in strip (3) form wound helically and comprising a support (4) and protection plates (5), adjoins a layer (8) formed by a resiliently deformable material that is inserted at least partially between said plates (5) at separating lines (7) between rows (6) of plates (5).

8. A manufacturing method using a mandrel for producing a multilayer pipe (1) comprising a step for manufacturing a layer (2) of said pipe (1) by helical winding in the form of adjoining turns of a strip (3) comprising a longitudinal support (4) and protection plates (5) fastened to said support (4), said protection plates (5) being organized on said support (4) in rows (6) having substantially parallel straight longitudinal edges, each row (6) of plates (5) being separated from an adjacent row (6) of plates (5) by a free space forming a separating line (7), the separating lines (7) being parallel to one another, **characterized in that** during the step for helical winding of the strip (3) around the mandrel, each separating line (7) is positioned in a plane perpendicular to the longitudinal axis of the mandrel.

9. The method according to claim 8,
**characterized in that** each separating line (7), equal in length to the circumference of the pipe (1) to be made at said layer, extending from one longitudinal edge (31) to the other longitudinal edge (31) of the strip (3) while forming a non-nil angle (α) different from 90° with each of the longitudinal edges of the strip and each transverse end edge (32) of the strip being a so-called beveled edge extending parallel to the separating lines (7), the winding step begins by winding one of the transverse end edges (32) of the strip (3) around the mandrel in a circumferential plane of the mandrel.
